# EUROPEAN PATENT APPLICATION

(11) **EP 4 485 197 A1**
(43) Date of publication of application: **01.01.2025**
(21) Application number: 24180157.0
(22) Date of filing: 05.06.2024
(51) Int. Cl.: G06F 9/48

(54) **SCHEDULING FOR INTER-BLOCKCHAIN COOPERATION MIDDLEWARE**

(30) Priority: 15.06.2023 JP 2023098763
(71) Applicant: Fujitsu Limited, Kawasaki-shi, Kanagawa 211-8588 (JP)
(72) Inventor: ISHIHARA, Shun, Kawasaki-shi, Kanagawa, 211-8588 (JP); MORINAGA, Masanobu, Kawasaki-shi, Kanagawa, 211-8588 (JP)
(74) Representative: Hoffmann Eitle

(57) **Abstract**

An information processing program causes a computer to execute a process of, when a group that includes a plurality of kinds of processing to be executed in a same time slot among a processing group targeted for a blockchain is generated, scheduling a processing group such that processing of which contents of execution parameter are same is not included in the group.

## Description

### FIELD

The embodiment discussed herein is related to an information processing program and the like.

### BACKGROUND

Inter-blockchain cooperation middleware (hereinafter, inter-BC cooperation MW) is known. Inter-BC cooperation MW refers to software having a function of executing a transaction across a plurality of blockchains (hereinafter, BCs) in response to a request from an application.

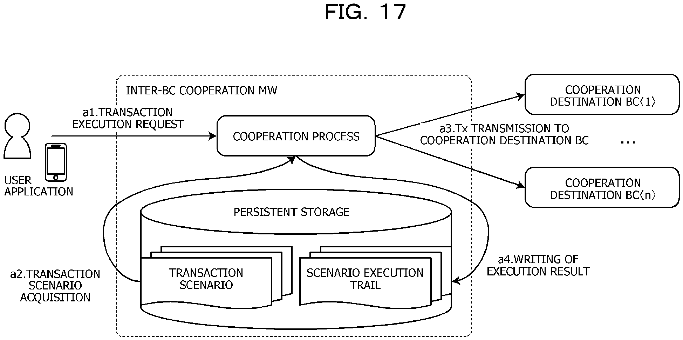

FIG. 17 is a reference diagram illustrating a representative example of inter-BC cooperation MW. As illustrated in FIG. 17, in inter-BC cooperation MW that has received a transaction execution request designating a transaction scenario defined in advance from a user application, a cooperation process acquires the designated transaction scenario from a persistent storage (a1, a2). The cooperation process transmits a transaction to the cooperation destination BCs described in the acquired transaction scenario (a3), and writes an execution result of the transaction to a scenario execution trail in the persistent storage (a4). For example, transaction scenario described herein refers to a scenario in which a crypto asset of a certain BC is exchanged with another crypto asset. The user application may execute a transaction across a plurality of BCs without executing processing specific to a BC by simply designating a transaction scenario defined in advance and making an execution request of a transaction.

However, since the cooperation process is a single process in the inter-BC cooperation MW illustrated in FIG. 17, transaction processing performance and availability may not be improved. For example, since a transaction scenario includes transaction transmission processing to a plurality of BCs, the cooperation process that processes a transaction scenario has a processing status (i.e., stateful) of transaction scenario indicating the transaction transmission in a transaction scenario currently being executed, and thus may not be multiplexed. To multiplex a cooperation process, a processing status of transaction scenario has to be taken out from the cooperation process so that the cooperation process has a configuration of no processing status (i.e., stateless).

As a method of making a cooperation process have a configuration of no processing status (i.e., stateless), the method of Sequential Convoy pattern may be used. Sequential Convoy pattern is a technique in which, when a process processes an ordered message group, each message group is stored in a different category in a message queue, and processing of messages in the message queue is distributed to a plurality of subsequent processes. However, even if a transaction execution request is turned into a message as it is, a large number of processes that transmit a large number of transactions still have to be used.

Accordingly, as an improvement measure for reducing the number of used processes, the method of job shop scheduling may be used. Job shop scheduling is an algorithm for optimizing an execution schedule when a collection of ordered message groups is executed by a plurality of machines. A method is conceivable in which the Sequential Convoy pattern is combined with job shop scheduling, and transmission of transactions is scheduled to be simultaneously executed in parallel before storage in a message queue. However, in the job shop scheduling of related art, overhead may occur when a transaction performed in a BC is executed. For example, overhead described herein includes a conflict between transactions at the same address, which may occur when transactions are simultaneously executed in a BC, and an excess in the number of simultaneously executable transactions in a BC.

Accordingly, as a scheduling method capable of reducing overhead when a transaction performed in a BC is executed, a method is known in which a transaction before BC transmission is analyzed in advance and an execution order is determined from the attribute information in the transaction.

U.S. Patent Application Publication No. 2018/0158034 is disclosed as related art.

Microsoft.2022. Sequential Convoy pattern, https://learn.microsoft.com/ja-jp/azure/architecture/patterns/sequential-convoy and Google.2023. The Job Shop Problem, https://developers.google.com/optimization/scheduling/job_shop are disclosed as related art.

### PROBLEMS

However, in related art, in a case of a BC that may not analyze a transaction in advance, there is a problem that overhead may not be avoided when a transaction is executed in the BC.

In related art, although an execution order of transactions may be optimized by the method of analyzing a transaction before BC transmission in advance and determining an execution order of transactions, since a transaction is analyzed in advance, application targets are limited to some BCs. Therefore, in the case of a BC that may not analyze a transaction in advance, overhead may not be avoided when a transaction is executed in the BC.

In one aspect, an object of the present disclosure is to avoid overhead when a transaction is executed in a BC.

### SUMMARY

According to an aspect of the embodiments, an information processing program causes a computer to execute a process of, when a group that includes a plurality of kinds of processing to be executed in a same time slot among a processing group targeted for a blockchain is generated, scheduling a processing group such that processing of which contents of execution parameter are same is not included in the group.

### [Effects of Invention]

According to one embodiment, overhead may be avoided when a transaction is executed in a BC.

### BRIEF DESCRIPTION OF DRAWINGS

FIG. 1 is a diagram illustrating an example of a configuration of inter-BC cooperation MW in which processes are multiplexed;
FIG. 2 is a diagram illustrating a correspondence between a transaction scenario and a topic;
FIG. 3 is a diagram illustrating an example of a scheduling result of a topic group;
FIG. 4 is a diagram illustrating an example of a configuration of inter-BC cooperation MW according to an exemplary embodiment;
FIG. 5 is a diagram illustrating an example of a transaction scenario according to the exemplary embodiment;
FIG. 6 is a diagram illustrating an example of a transaction execution request according to the exemplary embodiment;
FIG. 7 is a diagram illustrating an example of topic data according to the exemplary embodiment;
FIG. 8 is a diagram illustrating an example of a scheduling result according to the exemplary embodiment;
FIG. 9 is a diagram illustrating an example of a scenario execution trail according to the exemplary embodiment;
FIG. 10 is a diagram illustrating an example of the number of Tx in block according to the exemplary embodiment;
FIG. 11 is a diagram illustrating an overall flow of the inter-BC cooperation MW according to the exemplary embodiment;
FIG. 12 is a diagram illustrating an example of a flowchart of front process processing according to the exemplary embodiment;
FIG. 13 is a diagram illustrating an example of a flowchart of scheduling process processing according to the exemplary embodiment;
FIG. 14 is a diagram illustrating an example of the scheduling process processing according to the exemplary embodiment;
FIG. 15 is a diagram illustrating an example of a flowchart of worker process processing according to the exemplary embodiment;
FIG. 16 is a diagram for describing a hardware configuration example; and
FIG. 17 is a reference diagram illustrating a representative example of inter-BC cooperation MW.

### DESCRIPTION OF EMBODIMENTS

Hereinafter, an exemplary embodiment of an information processing program, an information processing apparatus, and an information processing method disclosed in the present application will be described in detail based on the drawings. The present disclosure is not limited by the exemplary embodiment.

First, a configuration will be described in which the Sequential Convoy pattern and job shop scheduling are applied to representative inter-BC cooperation MW. Inter-BC cooperation MW described herein refers to software having a function of executing a transaction across a plurality of blockchains (hereinafter, BCs) in response to a request from a user application. The Sequential Convoy pattern described herein is a technique in which, when a process processes an ordered message group, each message group is stored in a different category (topic) in a message queue, and processing of messages in the message queue is distributed to a plurality of subsequent processes. By applying the Sequential Convoy pattern to the inter-BC cooperation MW, each of a process that stores a message group in a message queue (front process) and a process that processes the messages in the message queue (worker process) does not have a processing status (i.e., stateless) of message, and thus multiplexing may be achieved. In a case where the number of categories (topics) is large, a large number of worker processes have to be used for processing messages.

Accordingly, in order to reduce the number of worker processes in the Sequential Convoy pattern, topics have to be compressed (topics have to be combined so as to enable parallel execution) before processing by the worker processes. As one of algorithms applicable to topic compression, there is job shop scheduling. Job shop scheduling described herein is an algorithm for optimizing an execution schedule when a collection of ordered message groups is executed by a plurality of machines. Each message has a constraint that it may be executed only by a specific machine. In order to apply job shop scheduling to the inter-BC cooperation MW, application may be achieved by replacing message with a transaction to a cooperation destination BC and replacing machine with a worker process dedicated to a specific cooperation destination BC.

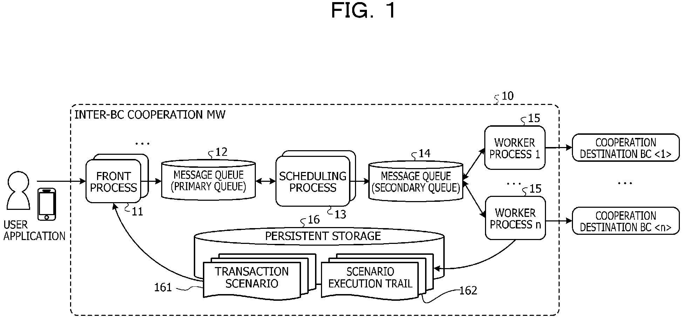

A configuration will be described with reference to FIG. 1 in which the Sequential Convoy pattern and job shop scheduling are applied to representative inter-BC cooperation MW and processes are multiplexed. FIG. 1 is a diagram illustrating an example of a configuration of inter-BC cooperation MW in which processes are multiplexed. Inter-BC cooperation MW 10 includes a front process 11, a message queue (primary queue) 12, a scheduling process 13, a message queue (secondary queue) 14, a worker process 15, and a persistent storage 16. There are a plurality of front processes 11, a plurality of scheduling processes 13, and a plurality of worker processes 15. The persistent storage 16 stores a transaction scenario 161 and a scenario execution trail 162. Each worker process 15 is coupled to each cooperation destination BC of which the worker process is in charge.

The front process 11 receives a transaction execution request, creates a topic by grouping a processing (step) group to be executed in the transaction, and stores the topic in the primary queue 12. A transaction execution request includes an identifier for identifying the transaction scenario 161 defined in advance and a value (content) corresponding to an execution parameter in the transaction scenario 161.

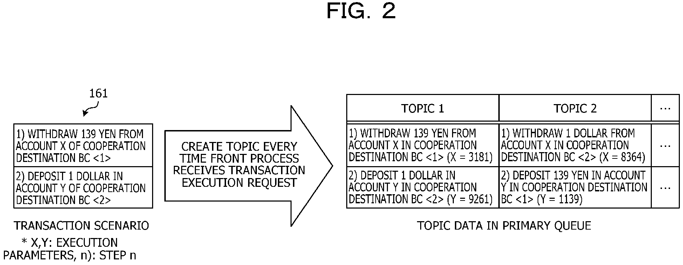

A correspondence example of the transaction scenario 161 and a topic is illustrated in FIG. 2. FIG. 2 is a diagram illustrating a correspondence between a transaction scenario and a topic. The transaction scenario 161 illustrated in FIG. 2 is a scenario in which a transaction across BCs is stylized. For example, the transaction scenario 161 is a transaction scenario corresponding to an identifier designated from a transaction execution request, and includes a plurality of kinds of processing (steps). The numbers "1)" and "2)" in the steps correspond to the step numbers included in a certain transaction scenario 161. X and Y in the steps correspond to execution parameters.

Every time a transaction execution request is received, the front process 11 acquires the transaction scenario 161 corresponding to the identifier included in the transaction execution request, creates a topic, and stores the topic in the primary queue 12. A topic is created by adding an execution parameter to the transaction scenario 161. As an example, in a case where the transaction scenario 161 is "1) Withdraw 139 yen from account X of cooperation destination BC <1> 2) Deposit 1 dollar in account Y of cooperation destination BC <2>", the topic is as follows. As the topic stored in the primary queue 12, "1) Withdraw 139 yen from account X of cooperation destination BC <1> (X = 3181) 2) Deposit 1 dollar in account Y of cooperation destination BC <2> (Y = 9261)" is stored. "X" corresponds to an execution parameter, and "3181" is the value thereof. "Y" corresponds to an execution parameter, and "9261" is the value thereof.

Returning to FIG. 1, the scheduling process 13 performs execution scheduling by job shop scheduling for all pieces of data in the primary queue 12 at regular time intervals, and stores a scheduling result in the secondary queue 14. After the storage in the secondary queue 14 is completed, the scheduling process 13 deletes the topic subjected to scheduling from the primary queue 12.

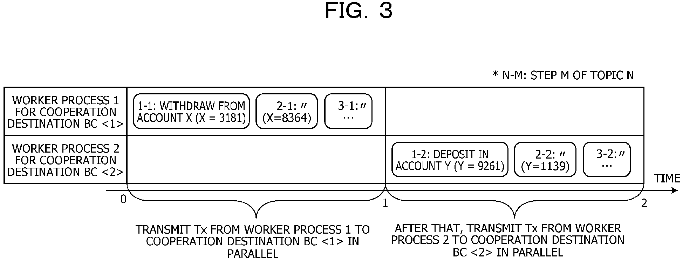

A scheduling result obtained in a case of a topic group including the topics illustrated in FIG. 2 is illustrated in FIG. 3. FIG. 3 is a diagram illustrating an example of a scheduling result of a topic group. As illustrated in FIG. 3, in the scheduling result, "1-1: Withdraw 139 yen from account X (X = 3181) 2-1: Withdraw 1 dollar from account X (X = 8364) ..." is stored in the group for cooperation destination BC <1> of the worker process 15₁. In the scheduling result, "1-2: Deposit 1 dollar in account Y (Y = 9261) 2-2: Deposit 139 yen in account Y (Y = 1139) ..." is stored in the group for cooperation destination BC <2> of the worker process 15₂. "N-M" of each step in a group indicates step M of topic N.

Returning to FIG. 1, the worker process 15 acquires the scheduling result from the secondary queue 14 and executes the step group in parallel. In the example of FIG. 3, the worker process 15₁ in charge of cooperation destination BC <1> acquires the scheduling result from the secondary queue 14 and transmits the step group in parallel. Each of the individual steps indicates a transaction. After that, the worker process 15₂ in charge of cooperation destination BC <2> acquires the scheduling result from the secondary queue 14 and transmits the step group in parallel. For example, the worker process 15 has a one to-one correspondence with a cooperation destination BC, and executes transaction transmission to the same cooperation destination BC in parallel. For this reason, even in the case where the number of topics (the number of transaction execution requests) is large, a large number of worker processes 15 do not have to be used. After the execution is completed, the worker process 15 deletes the data that has been executed from the secondary queue 14.

While the configuration of the inter-BC cooperation MW 10 illustrated in FIG. 1 reduces the number of worker processes 15, it may not avoid overhead specific to a BC which may occur when a scheduling result is executed. Overhead described herein includes (a) a conflict between transactions at the same address, which may occur when a plurality of transactions are simultaneously processed in a BC, and (b) an excess in the number of transactions processable in one block in a BC.

When (a) occurs, one transaction of the conflicting transactions fails to be executed. In such case, the execution schedule of the subsequent steps in the same topic of the failed transaction also has to be changed, and the entire execution time is delayed. When (b) occurs, time for consensus or block distribution for the transactions in excess occurs. For this reason, since the worker process 15 may not execute the subsequent steps during the waiting time for the transactions in excess, the entire execution time is delayed.

As an approach for avoiding overhead, there is a method in which a transaction before BC transmission is analyzed in advance and an execution order is determined from the attribute information in the transaction. However, the application range of such method is limited to a system that handles only a specific type of BC capable of analyzing a transaction in advance. Since the inter-BC cooperation MW 10 handles a plurality of types of BCs having different transaction structures, such method may not be used as an approach for avoiding overhead.

Accordingly, in the following exemplary embodiment, a method for avoiding overhead without depending on a specific BC or transaction structure will be described.

### [Exemplary Embodiment]

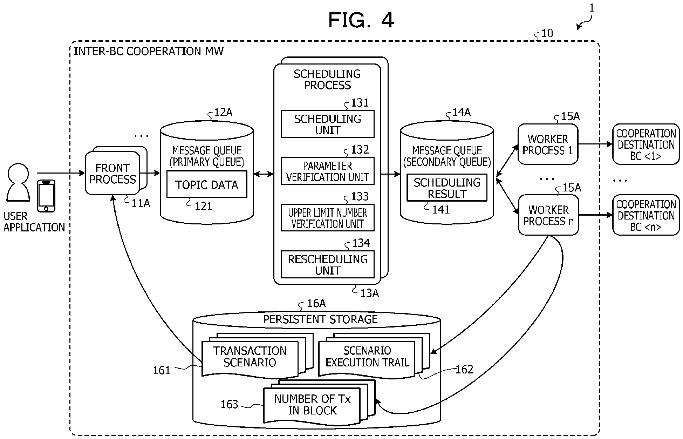

FIG. 4 is a diagram illustrating an example of a configuration of inter-BC cooperation MW according to the exemplary embodiment. Units that are the same as those of the inter-BC cooperation MW 10 illustrated in FIG. 1 are given the same reference signs, and description thereof will be omitted. A difference between the inter-BC cooperation MW 10 illustrated in FIG. 1 and inter-BC cooperation MW 10 illustrated in FIG. 4 is that the front process 11 is changed to a front process 11A. A difference is that the message queue (primary queue) 12 is changed to a message queue (primary queue) 12A. A difference is that the scheduling process 13 is changed to a scheduling process 13A. A difference is that the message queue (secondary queue) 14 is changed to a message queue (secondary queue) 14A. A difference is that the worker process 15 is changed to a worker process 15A. A difference is that the persistent storage 16 is changed to a persistent storage 16A.

As illustrated in FIG. 4, for example, the inter-BC cooperation MW 10 is installed in an information processing apparatus 1. The inter-BC cooperation MW 10 includes the front process 11A, the message queue (primary queue) 12A, the scheduling process 13A, the message queue (secondary queue) 14A, the worker process 15A, and the persistent storage 16A. The front process 11A is an example of a management unit. The scheduling process 13A is an example of a scheduling unit.

The persistent storage 16A stores the transaction scenario 161, the scenario execution trail 162, and a number of Tx in block 163. Tx described herein refers to a transaction. Hereinafter, there are cases in which "transaction" is referred to as "Tx".

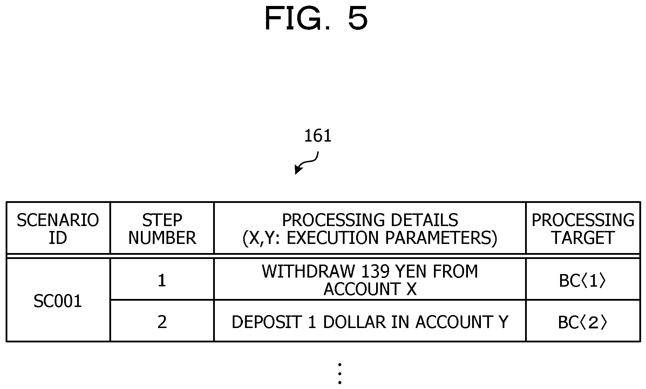

The transaction scenario 161 is a scenario in which a transaction across BCs is stylized, and is defined in advance. For example, the transaction scenario 161 is information corresponding to an identifier designated from a transaction execution request, and includes a plurality of steps. An execution parameter is set in the transaction scenario 161. An example of the transaction scenario 161 will be described with reference to FIG. 5.

FIG. 5 is a diagram illustrating an example of a transaction scenario according to the exemplary embodiment. As illustrated in FIG. 5, the transaction scenario 161 stores a scenario ID, a step number, processing details, and a processing target in association with each other. A scenario ID is an identifier for uniquely identifying the transaction scenario 161, and corresponds to an identifier designated from a transaction execution request. A step number is a number sequentially assigned to each step of the transaction scenario 161. Processing details are details of processing and correspond to common processing. An execution parameter is set in processing details. A target BC for which processing is executed is set as a processing target.

As an example, in a case where the scenario ID is "SC001", two step numbers are stored. In a case where the step number is "1", "Withdraw 139 yen from account X" is stored as the processing details, and "BC <1>" is stored as the processing target. In a case where the step number is "2", "Deposit 1 dollar in account Y" is stored as the processing details, and "BC <2>" is stored as the processing target. X and Y of the processing details are execution parameters.

Returning to FIG. 4, the scenario execution trail 162 holds an execution result of a scenario for a transaction execution request. The scenario execution trail 162 has a structure for storing an execution result of each step of a target transaction scenario. An example of the scenario execution trail 162 will be described later.

For each cooperation destination BC, the number of Tx in block 163 holds, in time series, the number of Tx (transactions) included in a block received from each cooperation destination BC. The number of Tx in block 163 is used when the upper limit value of a step group scheduled in the same time slot is verified for each cooperation destination BC. Step described herein is synonymous with transaction (Tx). An example of the number of Tx in block 163 will be described later.

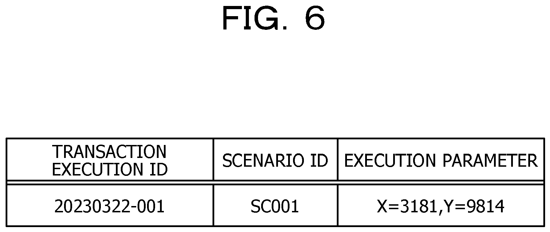

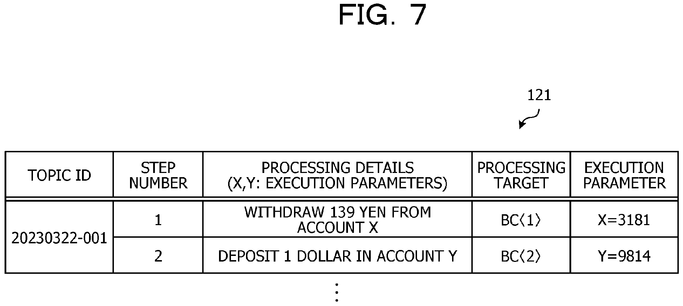

The front process 11A receives a transaction execution request, generates a topic by grouping a processing (step) group to be executed in the transaction, and stores the topic in topic data 121 of the primary queue 12A. A transaction execution request includes a scenario ID for identifying the transaction scenario 161 defined in advance and a value (content) corresponding to an execution parameter in the transaction scenario 161. For example, when a transaction execution request is received, the front process 11A acquires the transaction scenario 161 corresponding to the scenario ID included in the transaction execution request. The front process 11A generates a topic in which each step of the transaction scenario 161 and the execution parameter included in the transaction execution request are combined. The front process 11A stores the generated topic in the topic data 121 of the message queue (primary queue) 12A. Examples of a transaction execution request and the topic data 121 stored in the message queue (primary queue) 12A will be described with reference to FIGs. 6 and 7, respectively.

FIG. 6 is a diagram illustrating an example of a transaction execution request according to the exemplary embodiment. As illustrated in FIG. 6, a transaction execution request is information in which a transaction execution ID, a scenario ID, and an execution parameter are associated with each other. A transaction execution ID is an ID for uniquely identifying a transaction execution request. A scenario ID is an identifier for uniquely identifying the transaction scenario 161. An execution parameter is an identifier for identifying a user to be a transaction target. A value (content) corresponding to an execution parameter included in the processing details of the transaction scenario 161 is included in an execution parameter. As an example, a value uniquely identifiable in a BC, such as a wallet address or a serial number depending on the type of a BC, is included in an execution parameter. For example, a wallet address corresponds to a bank account number.

As an example, in a case where the transaction execution ID is "20230322-001", "SC001" is represented as the scenario ID and "X = 3181, Y = 9814" is represented as the execution parameter.

FIG. 7 is a diagram illustrating an example of topic data according to the exemplary embodiment. As illustrated in FIG. 7, the topic data 121 stores a topic ID, a step number, processing details, a processing target, and an execution parameter in association with each other. A topic ID is an ID for uniquely identifying a topic. A step number, processing details, and a processing target correspond to the step number, processing details, and processing target associated with a scenario used when a topic indicated by a topic ID is generated. Since a step number, processing details, and a processing target are similar to those described in the transaction scenario 161, description thereof will be omitted. An execution parameter is an identifier for identifying a user to be a transaction target, and corresponds to an execution parameter of a transaction execution request.

As an example, the topic data 121 corresponding to the transaction scenario 161 in FIG. 5 and the transaction execution request in FIG. 6 is generated as follows. In a case where the topic ID is "20230322-001", two step numbers are stored. In a case where the step number is "1", "Withdraw 139 yen from account X" is stored as the processing details, "BC <1>" is stored as the processing target, and "X = 3181" is stored as the execution parameter. In a case where the step number is "2", "Deposit 1 dollar in account Y" is stored as the processing details, "BC <2>" is stored as the processing target, and "Y = 9814" is stored as the execution parameter. X and Y of the processing details are variables of execution parameters.

Returning to FIG. 4, the scheduling process 13A includes a scheduling unit 131, a parameter verification unit 132, an upper limit number verification unit 133, and a rescheduling unit 134.

At regular time intervals, the scheduling unit 131 performs execution scheduling by job shop scheduling for all topics accumulated in the topic data 121 of the primary queue 12A. For example, the scheduling unit 131 acquires each step from the topic data 121 of the primary queue 12A, and performs scheduling for performing Tx transmission by job shop scheduling based on the target BC of the common processing in each step. Common processing described herein refers to processing details commonly performed for a processing target (cooperation destination BC). The scheduling unit 131 holds a tentative scheduling result in a temporary storage area. Accordingly, by using job shop scheduling, the scheduling unit 131 enables simultaneous transmission of Tx (transactions) to the same cooperation destination BC in a certain time slot in parallel.

For the tentative scheduling result, the parameter verification unit 132 performs verification of whether a plurality of steps is scheduled in the same time slot for the same execution parameter value of the same cooperation destination BC. When a plurality of steps is scheduled in the same time slot for the same execution parameter value of the same cooperation destination BC, the parameter verification unit 132 leaves the corresponding one step among the plurality of steps and separates the other steps from the tentative scheduling result. At this time, the parameter verification unit 132 separates, from the tentative scheduling result, the steps including the subsequent steps of the same topic as the separated steps. For example, in the verification of the same execution parameter value, the value of execution parameter in each step included in the tentative scheduling result or the value of execution parameter in each step included in the topic data 121 may be used.

For the tentative scheduling result, the upper limit number verification unit 133 aggregates the total number of steps scheduled in the same time slot in the same cooperation destination BC. The upper limit number verification unit 133 refers to the number of Tx in block 163, and performs verification of whether the aggregated total number exceeds the upper limit number corresponding to the target BC. When the aggregated total number exceeds the upper limit number corresponding to the target BC, the upper limit number verification unit 133 separates the steps in excess including the subsequent steps of the same topic from the tentative scheduling result. As the upper limit number corresponding to the target BC, an average value over a fixed time period of the number of Tx in time series corresponding to the target BC stored in the number of Tx in block 163 may be used.

The rescheduling unit 134 performs execution scheduling by job shop scheduling again for the separated step group. The rescheduling unit 134 merges all tentative scheduling results. The rescheduling unit 134 stores a scheduling result 141 indicating a merged result in the message queue (secondary queue) 14A. After the storage in the secondary queue 14A is completed, the rescheduling unit 134 deletes the topic subjected to scheduling from the primary queue 12A.

The worker process 15A acquires the scheduling result 141 from the secondary queue 14A, and executes the step group of the cooperation destination BC targeted by itself in parallel. For example, the worker process 15A has a one to-one correspondence with a cooperation destination BC, and executes, in parallel, transaction transmission (Tx transmission) to the cooperation destination BC of which the worker process is in charge. For this reason, even in the case where the number of topics (the number of transaction execution requests) is large, the number of worker processes 15A equal to the number of cooperation destination BCs is sufficient, and a large number of worker processes do not have to be used. After the execution is completed, the worker process 15A deletes the executed data from the secondary queue 14A.

The worker process 15A receives an execution result of Tx (transaction) in each cooperation destination BC in a block. The worker process 15A extracts the execution result of Tx from the block. The worker process 15A stores the number of Tx in the block in the persistent storage 16A in addition to the extracted execution result of Tx. For example, the worker process 15A stores the extracted execution result of Tx in the scenario execution trail 162. The worker process 15A stores the number of Tx in the block and the current date and time in the number of Tx in block 163 in association with the target BC.

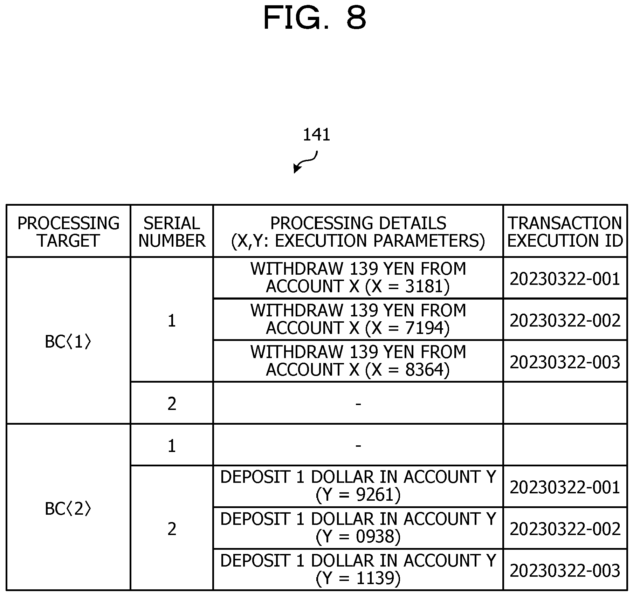

An example of the scheduling result 141 will be described with reference to FIG. 8. FIG. 8 is a diagram illustrating an example of a scheduling result according to the exemplary embodiment. As illustrated in FIG. 8, the scheduling result 141 stores a processing target, a serial number, processing details, and a transaction execution ID in association with each other. A processing target corresponds to a processing target of each step included in the topic data 121. A target BC for which processing is executed is set as a processing target. For example, a serial number is a sequential number representing the order of parallel transmission. Processing details are processing details to be transmitted in parallel, and are information in which an execution parameter and the value thereof are added to the processing details. A transaction execution ID is an ID for identifying transaction execution. A transaction execution ID is an ID of transaction execution for one topic.

As an example, in a case where the processing target is BC <1> and the serial number is "1", a group of three steps is stored as the processing details. For the first step, "Withdraw 139 yen from account X (X = 3181)" is stored as the processing details, and "20230322-001" is stored as the transaction execution ID. For the second step, "Withdraw 139 yen from account X (X = 7194)" is stored as the processing details, and "20230322-002" is stored as the transaction execution ID. For the third step, "Withdraw 139 yen from account X (X = 8364)" is stored as the processing details, and "20230322-003" is stored as the transaction execution ID.

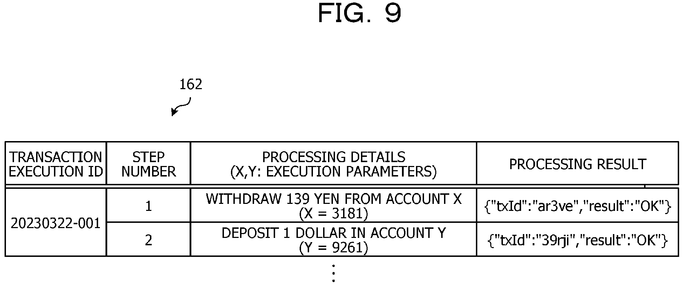

Next, an example of the scenario execution trail 162 will be described with reference to FIG. 9. FIG. 9 is a diagram illustrating an example of a scenario execution trail according to the exemplary embodiment. As illustrated in FIG. 9, the scenario execution trail 162 stores a transaction execution ID, a step number, processing details, and a processing result in association with each other. A transaction execution ID is an ID for identifying transaction execution. A transaction execution ID is a transaction execution ID for one scenario (topic), and corresponds to a transaction execution ID in the scheduling result 141. A step number corresponds to a number sequentially assigned to each step in the transaction scenario 161 and the topic data 121. Processing details are information in which an execution parameter and the value thereof are added to the processing details. Processing details correspond to processing details of one step included in the scheduling result 141. A processing result is an execution result transmitted from a BC. As an example, a processing result includes "OK" indicating that execution has succeeded or "NG" indicating that execution has failed.

As an example, in a case where the transaction execution ID is "20230322-001", two steps are stored. In a case where the step number is "1", "Withdraw 139 yen from account X (X = 3181)" is stored as the processing details, and "...;"OKʺʺ is stored as the processing result. In a case where the step number is "2", "Deposit 1 dollar in account Y (Y = 9261)" is stored as the processing details, and "...;"OKʺʺ is stored as the processing result.

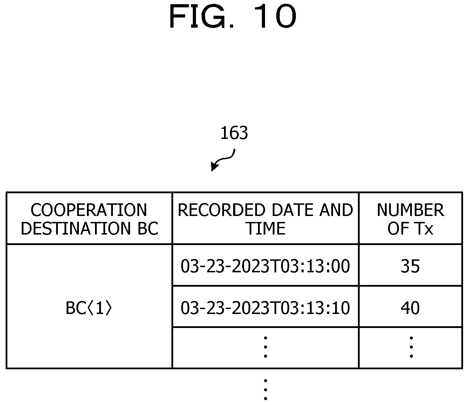

Next, an example of the number of Tx in block 163 will be described with reference to FIG. 10. FIG. 10 is a diagram illustrating an example of a number of Tx in block according to the exemplary embodiment. The number of Tx in block stores a cooperation destination BC, recorded date and time, and the number of Tx in association with each other. A cooperation destination BC is a BC of cooperation destination. Recorded date and time are date and time when the number of Tx is recorded. The number of Tx is the number of Tx included in a block transmitted from a cooperation destination BC.

As an example, in a case where the cooperation destination BC is BC <1>, "2023-03-23T03:13:00" is stored as the recorded date and time, and "35" is stored as the number of Tx.

### [Overall Flow of Inter-BC Cooperation MW]

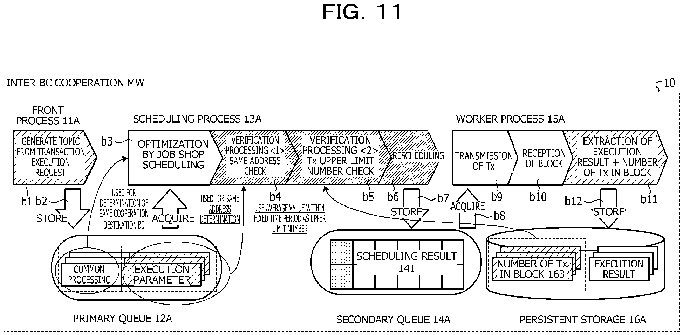

An overall flow of the inter-BC cooperation MW according to the exemplary embodiment will be described with reference to FIG. 11. FIG. 11 is a diagram illustrating an overall flow of the inter-BC cooperation MW according to the exemplary embodiment.

As illustrated in FIG. 11, the front process 11A generates a topic by grouping a processing (step) group to be executed in a transaction from a transaction execution request, and stores the topic in the topic data 121 of the primary queue 12A (b1, b2). For example, the front process 11A generates a topic in which common processing (each step) of the transaction scenario 161 corresponding to a scenario ID included in a transaction execution request and an execution parameter (and the value thereof) included in the transaction execution request are combined, and stores the topic in the topic data 121 of the primary queue 12A.

Next, the scheduling process 13A acquires each step included in each topic from the topic data 121 of the primary queue 12A, and performs scheduling by job shop scheduling using the common processing of each step (b3). The scheduling process 13A holds a tentative scheduling result in a temporary storage area.

The scheduling process 13A performs verification processing <1> of checking the same address (b4). For example, for the tentative scheduling result, the scheduling process 13A performs verification of whether a plurality of steps is scheduled in the same time slot for the same execution parameter value of the same cooperation destination BC. For example, the scheduling process 13A checks the same address in the same cooperation destination BC and the same time slot by using an execution parameter and the value thereof in each step acquired from the topic data 121 of the primary queue 12A.

When a plurality of steps is scheduled in the same time slot for the same execution parameter value of the same cooperation destination BC, the scheduling process 13A leaves the corresponding one step among the plurality of steps and separates the other steps from the tentative scheduling result. At this time, the scheduling process 13A separates, from the tentative scheduling result, the steps including the subsequent steps of the same topic as the separated steps.

Next, the scheduling process 13A performs verification processing <2> of checking the Tx upper limit number by using the number of Tx in block 163 (b5). For example, for the tentative scheduling result, the scheduling process 13A aggregates the total number of steps scheduled in the same time slot in the same cooperation destination BC. The scheduling process 13A refers to the number of Tx in block 163, and performs verification of whether the aggregated total number exceeds the upper limit number corresponding to the target BC. As the upper limit number corresponding to the target BC, for example, an average value over a fixed time period of the number of Tx in time series corresponding to the target BC stored in the number of Tx in block 163 is used.

When the aggregated total number exceeds the upper limit number corresponding to the target BC, the scheduling process 13A separates the steps in excess including the subsequent steps of the same topic from the tentative scheduling result.

Next, the scheduling process 13A performs rescheduling by job shop scheduling for the separated step group (b6). For a result of the rescheduling, the scheduling process 13A executes verification processing <1> and verification processing <2>. When there is a separated step group, the scheduling process 13A performs rescheduling. When there is no separated step group, the scheduling process 13A merges all tentative scheduling results and stores the scheduling result 141 indicating the merged result in the message queue (secondary queue) 14A (b7).

Next, the worker process 15A acquires the scheduling result 141 from the secondary queue 14A (b8). The worker process 15A executes Tx transmission to the same cooperation destination BC in parallel based on the scheduling result 141 (b9). The worker process 15A receives an execution result of Tx in each cooperation destination BC in a block (b10). The worker process 15A extracts the execution result of Tx from the received block, and counts the number of Tx in the block (b11). The worker process 15A stores the execution result of Tx in the scenario execution trail 162 of the persistent storage 16A, and stores the number of Tx in the block and the current date and time in the number of Tx in block 163 of the persistent storage 16A in association with the target BC (b12).

It has been described that the scheduling process 13A performs verification processing <1> of checking the same address and verification processing <2> of checking the Tx upper limit number in this order. However, the scheduling process 13A may perform the processing in the opposite order, or may perform either one of verification processing <1> and verification processing <2>. Accordingly, the scheduling process 13A may reduce overhead when a transaction is executed in a BC.

### [Flowchart of Front Process Processing]

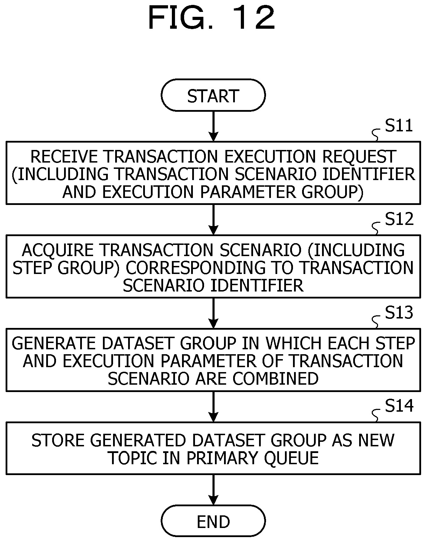

Next, a flowchart of front process processing executed by the front process 11A will be described. FIG. 12 is a diagram illustrating an example of a flowchart of front process processing according to the exemplary embodiment.

As illustrated in FIG. 12, the front process 11A receives a transaction execution request from a user application (step S11). A transaction scenario identifier and an execution parameter group are included in such transaction execution request. Each execution parameter of the execution parameter group includes an execution parameter and the value thereof. The front process 11A acquires the transaction scenario 161 corresponding to the transaction scenario identifier included in the received transaction execution request (step S12).

The front process 11A generates a dataset group (topic) in which each step of the transaction scenario 161 and an execution parameter are combined (step S13).

The front process 11A stores the generated dataset group (topic) in the topic data 121 of the primary queue 12A as a new topic (step S14). The front process 11A ends the front process processing.

### [Flowchart of Scheduling Process Processing]

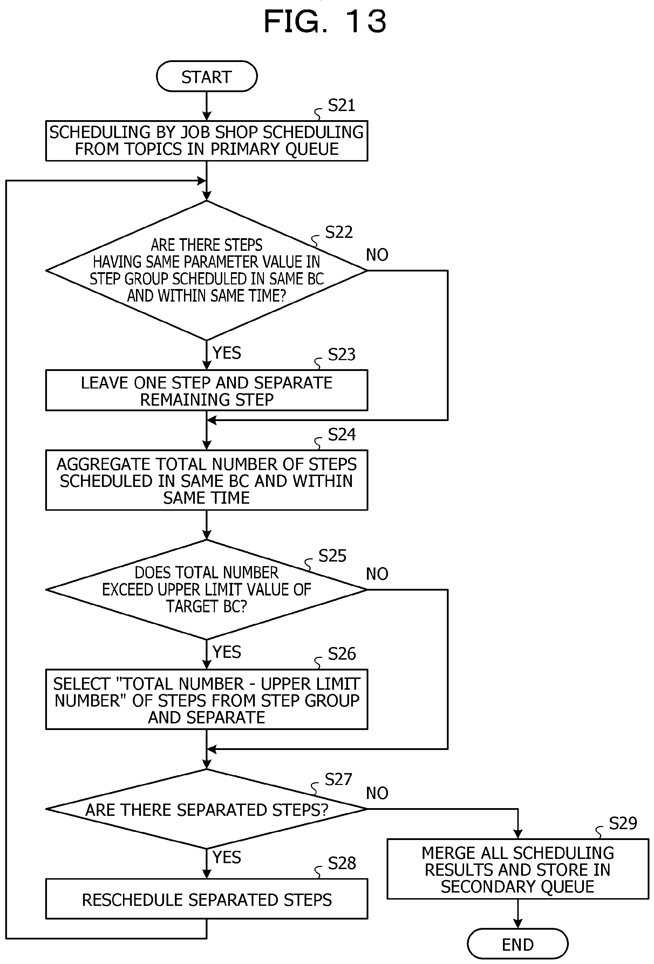

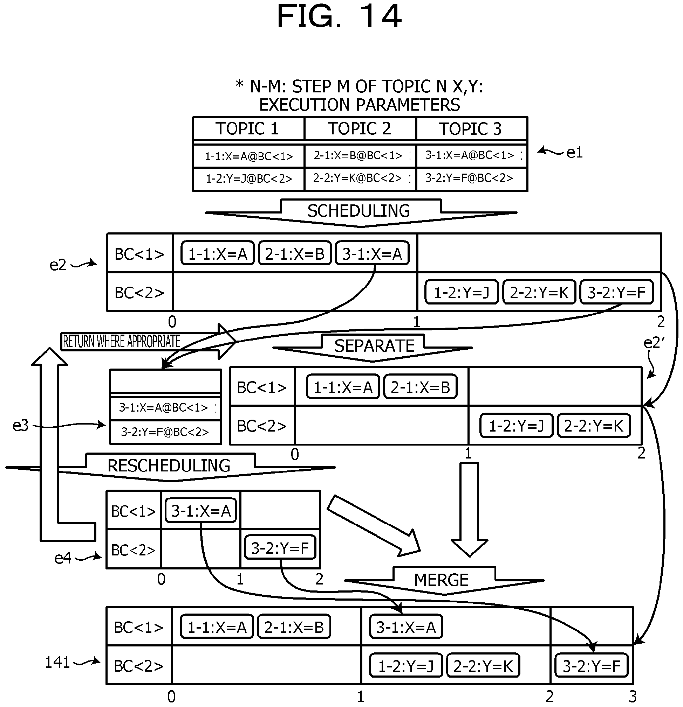

Next, a flowchart of scheduling process processing executed by the scheduling process 13A will be described. FIG. 13 is a diagram illustrating an example of a flowchart of scheduling process processing according to the exemplary embodiment. In such description, description will be given with reference to an example of the scheduling process processing illustrated in FIG. 14 as appropriate. FIG. 14 is a diagram illustrating an example of the scheduling process processing according to the exemplary embodiment.

As illustrated in FIG. 13, the scheduling process 13A performs scheduling by job shop scheduling from the topics stored in the topic data 121 of the primary queue 12A (step S21).

As indicated by reference sign e1 in FIG. 14, a group of three topics generated by three transaction execution requests is stored in the topic data 121. Each topic consists of two steps of Tx transmission to BC <1> and Tx transmission to BC <2>. For example, "1-1; X = A@BC <1>" and "1-2; Y = J@BC <2>" are stored in topic "1". "1-1" described herein indicates step "1" of topic "1". "1-2" indicates step "2" of topic "1". "X = A" and "Y = J" are execution parameters, and "A" and "J" are execution parameter values. "BC <1>" and "BC <2>" are target BCs. Topic "2" and topic "3" are also stored in a format similar to that of topic "1". A result of scheduling the group of three topics in accordance with job shop scheduling is a tentative scheduling result indicated by reference sign e2.

Subsequently, the scheduling process 13A refers to the tentative scheduling result, and determines whether there are steps having the same parameter value in the step group scheduled in the same BC and within the same time (step S22). For example, the scheduling process 13A executes verification processing of checking the same address. When it is determined that there are no steps having the same parameter value in the step group scheduled in the same BC and within the same time (step S22; No), the scheduling process 13A proceeds to step S24. On the other hand, when it is determined that there are steps having the same parameter value in the step group scheduled in the same BC and within the same time (step S22; Yes), the scheduling process 13A leaves one step and separates the remaining step including the subsequent steps (step S23). The scheduling process 13A proceeds to step S24.

As illustrated in FIG. 14, in the tentative scheduling result indicated by reference sign e2, two steps of "1-1" and "3-1" in the step group scheduled at the time "0" to "1" have the same execution parameter values (X = A), and thus are determined to be separation targets. For example, the scheduling process 13A sets the step of "3-1" in this step group as a separation target including the subsequent step of "3-2" of topic 3. The scheduling process 13A holds a result of returning the step of "3-1" and the step of "3-2" to the original format, for example, the format stored in the topic data 121. A result of returning to the original format is the contents indicated by reference sign e3. A tentative scheduling result after the separation is the contents indicated by reference sign e2'.

In step S24, the scheduling process 13A aggregates the total number of steps scheduled in the same BC and within the same time (step S24). The scheduling process 13A refers to the number of Tx in block 163, and determines whether the aggregated total number exceeds the upper limit value of the target BC (step S25). For example, the scheduling process 13A executes verification processing of checking the Tx upper limit number. When it is determined that the aggregated total number does not exceed the upper limit value of the target BC (step S25; No), the scheduling process 13A proceeds to step S27.

On the other hand, when it is determined that the aggregated total number exceeds the upper limit value of the target BC (step S25; Yes), the scheduling process 13A performs the following processing. The scheduling process 13A randomly selects "total number - upper limit number" of steps from the step group for which the total number is aggregated, and separates the selected steps including the subsequent steps (step S26). The scheduling process 13A proceeds to step S27.

It is assumed that each of the Tx upper limit values of BC <1> and BC <2> is "2". As illustrated in FIG. 14, since the total number of steps scheduled in the same BC and within the same time does not exceed the Tx upper limit value in the tentative scheduling result indicated by reference sign e2', the scheduling process 13A does not perform the separation processing.

Subsequently, the scheduling process 13A determines whether there are separated steps (step S27). When it is determined that there are separated steps (step S27; Yes), the scheduling process 13A reschedules the separated steps (step S28). As illustrated in FIG. 14, a result of rescheduling the separated steps indicated by reference sign e3 is the result indicated by reference sign e4.

The scheduling process 13A proceeds to step S22 in order to execute the verification processing of checking the same address and the verification processing of checking the Tx upper limit number for the result of rescheduling the separated steps. As illustrated in FIG. 14, the result of rescheduling the separated steps (reference sign e4) does not include a step group determined as a separation target by the verification processing of checking the same address and the verification processing of checking the Tx upper limit number.

When it is determined that there are no separated steps in step S27 (step S27; No), the scheduling process 13A performs the following processing. The scheduling process 13A merges all scheduling results and stores the merged result in the scheduling result 141 of the secondary queue 14A (step S29).

As illustrated in FIG. 14, the tentative scheduling result (reference sign e2') and the rescheduling result (reference sign e4) are merged. The merged result is stored in the scheduling result 141 of the secondary queue 14A.

### [Flowchart of Worker Process Processing]

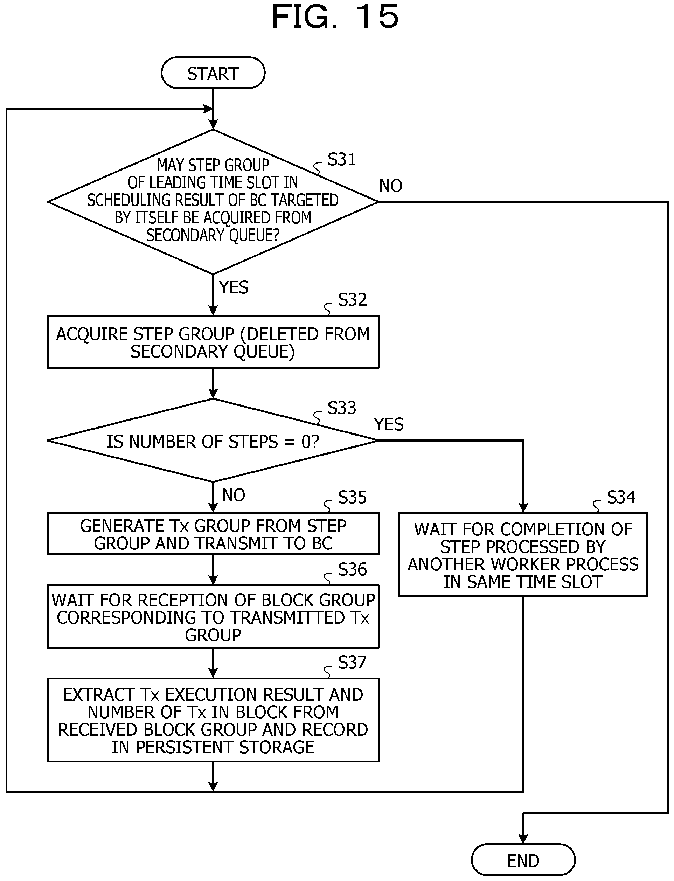

Next, a flowchart of worker process processing executed by the worker process 15A will be described. FIG. 15 is a diagram illustrating an example of flowchart of worker process processing according to the exemplary embodiment.

As illustrated in FIG. 15, the worker process 15A determines whether a step group of the leading time slot of the BC targeted by itself may be acquired from the scheduling result 141 of the secondary queue 14A (step S31). When it is determined that a step group of the leading time slot of the cooperation destination BC targeted by itself may be acquired (step S31; Yes), the worker process 15A acquires the step group (step S32). The worker process 15A deletes the acquired step group from the scheduling result 141 of the secondary queue 14A.

The worker process 15A determines whether the acquired number of steps is "0" (step S33). When it is determined that the acquired number of steps is "0" (step S33; Yes), the worker process 15A waits for completion of a step processed by another worker process 15A in the same time slot (step S34). When the processing of the other worker process 15A is completed, the worker process 15A proceeds to step S31 in order to perform processing in the next time slot.

On the other hand, when it is determined that the acquired number of steps is not "0" (step S33; No), the worker process 15A generates a Tx group from the acquired step group and transmits the Tx group to the target BC (step S35).

The worker process 15A waits for reception of a block group corresponding to the transmitted Tx group (step S36). The worker process 15A extracts a Tx execution result included in each block and the number of Tx in each block from the received block group, and records the Tx execution result and the number of Tx in the persistent storage 16A (step S37). For example, the worker process 15A stores the extracted Tx execution results included in the blocks in the scenario execution trail 162. The worker process 15A stores the number of Tx in each block and the current date and time in the number of Tx in block 163 in association with the target BC. The worker process 15A proceeds to step S31 in order to perform processing in the next time slot.

In step S31, when it is determined that a step group of the leading time slot of the BC targeted by itself may not be acquired (step S31; No), the worker process 15A ends the worker process processing.

### [Effects of Exemplary Embodiment]

According to the above exemplary embodiment, when a group including a plurality of kinds of processing to be executed in the same time slot among a processing group targeted for a blockchain is generated, the information processing apparatus 1 schedules the processing group such that processing of which contents of execution parameter are the same is not included in the group. According to such configuration, the information processing apparatus 1 may avoid re-execution of processing in the same group caused by the presence of same execution parameters in the same group without depending on a specific type of blockchain. For example, the information processing apparatus 1 may avoid overhead when a transaction is executed in a blockchain without depending on a specific type of blockchain capable of analyzing a transaction before transmission to a blockchain.

According to the above exemplary embodiment, regarding the scheduling processing, the information processing apparatus 1 performs scheduling for executing a plurality of kinds of processing targeted for the same blockchain in the same time slot, and generates a result of scheduling for a group. In a case where a plurality of kinds of processing of which contents of execution parameter are the same is included in the group, the information processing apparatus 1 separates the processing excluding one kind of processing of the plurality of kinds of processing from the group. The information processing apparatus 1 reschedules the separated processing. According to such configuration, the information processing apparatus 1 may avoid a conflict caused by the presence of same execution parameters in the same group.

According to the above exemplary embodiment, regarding the scheduling processing, the information processing apparatus 1 further verifies whether a plurality of kinds of processing the number of which exceeds the upper limit number is included in the group from which the processing is separated, and separates the processing in excess from the group when a plurality of kinds of processing the number of which exceeds the upper limit number is included in the group. The information processing apparatus 1 reschedules the separated processing. According to such configuration, the information processing apparatus 1 may avoid waiting time caused by the presence of the number of kinds of processing exceeding the upper limit number in the same group. For example, the information processing apparatus 1 may avoid overhead when a transaction is executed in a blockchain.

According to the above exemplary embodiment, the information processing apparatus 1 transmits each processing group included in each group to a target blockchain based on a result scheduled by the scheduling processing. The information processing apparatus 1 receives, from the target blockchain, a block including an execution result corresponding to the processing. The information processing apparatus 1 estimates the upper limit number of a group corresponding to the target blockchain by using the number of execution results included in the block. According to such configuration, the information processing apparatus 1 may estimate the upper limit number of a block for each blockchain that varies depending on the type of a blockchain.

According to the above exemplary embodiment, regarding the processing of estimating the upper limit number, the information processing apparatus 1 calculates an average value of the number of execution results included in a block within the latest fixed time period by using the number of execution results included in the block and the time of day when the execution results are accumulated. The information processing apparatus 1 estimates the calculated average value as the upper limit number of a group corresponding to the target blockchain. According to such configuration, the information processing apparatus 1 may estimate, in real time, the upper limit number of a block for each blockchain that varies depending on the type of a blockchain and the system status.

### [Others]

In the above exemplary embodiment, for example, the inter-BC cooperation MW 10 is described to be installed in the information processing apparatus 1. However, all functions of the inter-BC cooperation MW 10 do not have to be installed in one information processing apparatus 1, and each function may be installed in a distributed manner in a plurality of information processing apparatuses 1. For example, the front process 11A, the primary queue 14A, the scheduling process 13A, the secondary queue 14A, the worker process 15A, and the persistent storage 16A may be installed in different information processing apparatuses 1. By installing each function in a distributed manner, availability may be further improved.

In the above exemplary embodiment, each constituent element of the illustrated information processing apparatus 1 does not have to be physically constituted as illustrated. For example, the specific form of distribution or integration of the information processing apparatus 1 is not limited to that illustrated in the drawings, and all or part thereof may be configured to be functionally or physically distributed or integrated in arbitrary units depending on various loads, usage states, and so forth. The persistent storage 16A may be coupled via a network as an external device of the information processing apparatus 1.

All or arbitrary part of the processing functions performed by the information processing apparatus 1 illustrated in FIG. 4 may be realized by a central processing unit (CPU) and a program analyzed and executed by the CPU, or may be realized as hardware using wired logic.

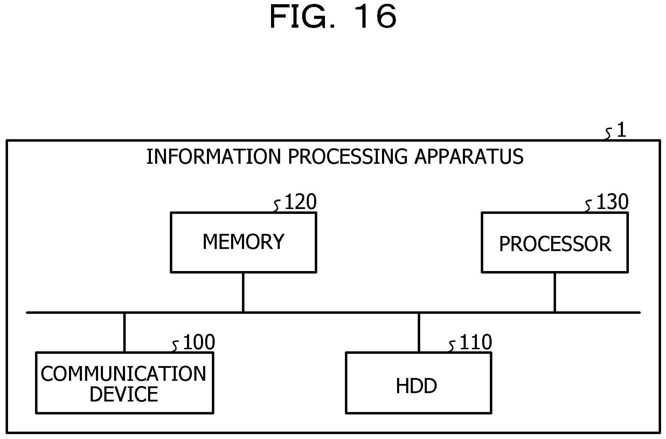

FIG. 16 is a diagram for describing a hardware configuration example. As illustrated in FIG. 16, the information processing apparatus 1 includes a communication device 100, a hard disk drive (HDD) 110, a memory 120, and a processor 130. The components illustrated in FIG. 16 are coupled to one another by a bus or the like.

The communication device 100 is a network interface card or the like, and communicates with another apparatus. The HDD 110 stores a database (DB) and a program that causes the functions illustrated in FIG. 4 to operate.

The processor 130 includes a cache memory. The processor 130 reads a program for executing processing similar to that of each processing unit illustrated in FIG. 4 from the HDD 110 or the like and loads the program into the memory 120, thereby causing a process of executing each function described with reference to FIG. 4 and the like to operate. For example, this process executes a function similar to that of each processing unit included in the information processing apparatus 1. For example, the processor 130 reads a program having a function similar to that of the inter-BC cooperation MW 10 or the like from the HDD 110 or the like. The processor 130 executes a process of executing processing similar to that of the inter-BC cooperation MW 10 or the like.

As described above, the information processing apparatus 1 operates as an apparatus that executes management processing by reading and executing the program. The information processing apparatus 1 may also realize a function similar to that of the exemplary embodiment described above by reading the above program from a recording medium with a medium reading device and executing the above read program. The program referred to in this other exemplary embodiment is not limited to being executed by the information processing apparatus 1. For example, the present disclosure may be similarly applied to a case where another computer or server executes the program or a case where the other computer and server execute the program in cooperation with each other.

This program may be distributed via a network such as the Internet. This program may be recorded on a computer-readable recording medium such as a hard disk, a flexible disk (FD), a compact disc read-only memory (CD-ROM), a magneto-optical (MO) disk, or a Digital Versatile Disc (DVD), and may be executed by being read from the recording medium by a computer.

For example, the inter-BC cooperation MW 10 described in the above exemplary embodiment may be applied to a service that performs scheduling of processing in transactions or deployment of assets across BCs.

## Claims

1. An information processing program for causing a computer to execute a process of,
when a group that includes a plurality of kinds of processing to be executed in a same time slot among a processing group targeted for a blockchain is generated, scheduling a processing group such that processing of which contents of execution parameter are same is not included in the group.

2. The information processing program according to claim 1, wherein
the scheduling includes
performing scheduling for executing a plurality of kinds of processing targeted for a same blockchain in a same time slot, and generating a result of scheduling in the group,
separating, in a case where a plurality of kinds of processing of which contents of the execution parameter are same is included in the group, processing excluding one kind of processing of the plurality of kinds of processing from the group, and
rescheduling separated processing.

3. The information processing program according to claim 1 or claim 2, wherein
the scheduling further includes
verifying whether a plurality of kinds of processing a number of which exceeds an upper limit number is included in the group from which processing is separated, and separating processing in excess from the group when a plurality of kinds of processing a number of which exceeds the upper limit number is included in the group, and
rescheduling separated processing.

4. The information processing program according to claim 3, wherein
each processing group included in each group is transmitted to a target blockchain based on a result scheduled by the scheduling,
a block that includes an execution result that corresponds to processing is received from the target blockchain, and
the separating of processing in excess from the group includes
estimating the upper limit number of the group that corresponds to the target blockchain by using a number of execution results included in the block and
verifying whether a plurality of kinds of processing a number of which exceeds the estimated upper limit number is included in the group from which processing is separated.

5. The information processing program according to claim 4, wherein
the estimating of the upper limit number includes
calculating an average value of a number of execution results included in the block within a latest fixed time period by using a number of execution results included in the block and time of day when the execution results are accumulated and
estimating the calculated average value as an upper limit number of a group that corresponds to the target blockchain.

6. An information processing apparatus comprising:
a scheduling unit configured to schedule, when a group that includes a plurality of kinds of processing to be executed in a same time slot among a processing group targeted for a blockchain is generated, a processing group such that processing of which contents of execution parameter are same is not included in the group.

7. An information processing method comprising: when a group that includes a plurality of kinds of processing to be executed in a same time slot among a processing group targeted for a blockchain is generated, scheduling a processing group such that processing of which contents of execution parameter are same is not included in the group.
